# EUROPÄISCHE PATENTSCHRIFT

(11) **EP 0 554 757 B1**
(45) Veröffentlichungstag und Bekanntmachung des Hinweises auf die Patenterteilung: **09.04.1997**
(21) Anmeldenummer: 93101113.4
(22) Anmeldetag: 26.01.1993
(51) Int. Cl.: C04B 28/26, C09D 1/02, C09J 1/02

(54) **Einkomponenten-Alkalisilikat-Zementzusammensetzung**
One-component alkali silicate cement composition
Composition de ciment en silicate d'alcali à une composante

(30) Priorität: 28.01.1992 DE 4202196
(43) Veröffentlichungstag der Anmeldung: 11.08.1993
(73) Patentinhaber: HOECHST AKTIENGESELLSCHAFT, 65926 Frankfurt am Main (DE)
(72) Erfinder: Ernst, Josef, W-6239 Eppstein/Ts. (DE); Semmler, Hans Joachim, Dr., W-6203 Hochheim am Main (DE); Wirtz, Peter, Dr., W-6240 Königstein/Ts. (DE)

(56) Entgegenhaltungen:
- EP-A- 0 133 953
- DE-A- 3 006 551
- DE-A- 3 133 354

## Beschreibung

Die vorliegende Erfindung betrifft eine trockene, tensidfreie Einkomponenten-Alkalisilikat-Zementzusammensetzung, die zur Herstellung von säurefesten Kitten und säurefesten Mörtelmassen, aber auch zum Aufbringen mittels Betonspritzmaschinen, insbesondere nach dem Torkret-Verfahren, geeignet ist.

Die genannten säurefesten Kitte können nicht nur zum Aufbringen mittels Betonspritzmaschinen, sondern auch zum Vermauern, Verfugen und Verlegen von säurefesten Steinen und Platten dienen.

Es ist bereits aus EP-B-0 133 953 (entsprechend US-PS 4 597 796) eine trockene, tensidfreie Einkomponenten-Alkalisilikat-Zementzusammensetzung bekannt, die folgende Bestandteile enthält:
a) Metallphosphat-Härter in Mengen zwischen 2-10 Gew.-%
b) abgerundeten Quarzsand mit einer Korngröße zwischen etwa 0,03 und 0,5 mm in Mengen von 30-70 Gew.-%,
c) Tonbestandteile in Mengen von 10-40 Gew.-%,
d) Kieselgur in Mengen von 1-5 Gew.-%,
e) Mineralöl in Mengen von 0,05-1 Gew.-%,
f) festes gepulvertes Natrium- oder Kaliumwasserglas oder deren Gemische in Mengen von 10-25 Gew.-%.

Als Metallphosphat-Härter werden dabei kondensierte Aluminiumphosphate gemäß US-PS 3 445 257 (DE-C-1 252 835) oder kondensierte Eisen/Aluminiumphosphate gemäß US-PS 4 482 380 (DE-A-3 133 354) eingesetzt.

Es hat sich nun herausgestellt, daß man eine Einkomponenten-Alkalisilikat-Zementzusammensetzung mit wesentlich verbesserten Eigenschaften erhält, wenn man statt eines der beiden oben genannten Härter eine Mischung aus kondensiertem Aluminiumphosphat mit bestimmten nicht-kondensierten Ortho-oder Pyrophosphaten verwendet. Das heißt, das kondensierte Aluminiumphosphat wird gemischt mit mindestens einem Phosphat aus der Gruppe, bestehend aus den Ortho- und Pyrophosphaten von Mangan, Zink, Cobalt, Eisen (III) und Chrom (III). Ein solcher gemischter Härter hat wesentlich bessere Eigenschaften als ein nur aus kondensiertem Aluminiumphosphat bestehender Härter gemäß EP-B-0 133 953. Weiter hat ein solcher gemischter Härter mindestens genauso gute Eigenschaften, wie der ebenfalls in EP-B-0 133 953 beschriebene kondensierte Eisen/Aluminiumphosphat-Härter, der jedoch wegen der notwendigen Kondensation der Eisenkomponente wesentlich schwieriger herzustellen ist als der erfindungsgemäße gemischte Härter.

Gegenstand der Erfindung ist demgemäß eine trockene, tensidfreie Einkomponenten-Alkalisilikat-Zementzusammensetzung, gekennzeichnet durch die folgenden Bestandteile:
a) kondensiertes Aluminiumphosphat in Mengen von 2-10 Gew.-%
b) mindestens eine Verbindung aus der Gruppe, bestehend aus den Ortho-und Pyrophosphaten von Mangan, Zink, Cobalt, Eisen (III) und Chrom (III) in Mengen von 0,5 bis 8 Gew.-%
c) abgerundeter Quarzsand mit einer Korngröße von 0,01 - 0,5 mm in Mengen von 30-70 Gew.-%
d) Ton in Mengen von 10-40 Gew.-%
e) Kieselgur in Mengen von 1-5 Gew.-%
f) Mineralöl in Mengen von 0,05-1 Gew.-% und
g) festes gepulvertes Natrium- oder Kaliumwasserglas oder deren Gemische in Mengen von 10-25 Gew.-%

Vorzugsweise wird als Bestandteil b) ein Ortho- oder Pyrophosphat von Mangan, Zink oder Eisen (III) eingesetzt, insbesondere Manganorthophosphat Mn₃(PO₄)₂.

Das kondensierte Aluminiumphosphat wird beispielsweise gemäß US-PS 3 445 257 hergestellt. Der verwendete Ton sollte trocken sein. Bevorzugt ist kaolinitischer Ton. Das eingesetzte Kieselgur ist vorzugsweise nicht kalziniert. Das Molverhältnis SiO₂/Alkalimetalloxid sollte im Falle des Kaliwasserglases etwa 1-1,5 und im Falle des Natronwasserglases 2,0 bis 3,3 betragen. Pro Gewichtsteil Härter (d. h. Bestandteile a) und b) zusammen) werden etwa 2,5 bis 3,5 Teile Natronwasserglas oder 3,5 bis 4,5 Gewichtsteile Kaliwasserglas bevorzugt.

Bei den eingesetzten runden Quarzsanden soll das sogenannte Eckigkeitsverhältnis unter 1,5 liegen, vorzugsweise unter 1,4. Unter Eckigkeitsverhältnis versteht man das Verhältnis der praktisch ermittelten Oberfläche zur theoretischen Oberfläche, wobei als theoretische Oberfläche die aus dem Kornspektrum errechnete Oberfläche von kugelförmigen Teilchen gleichen Volumens angenommen wird.

Eine erfindungsgemäße trockene Einkomponenten-Zementzusammensetzung kann wie folgt hergestellt werden:
Ausgewählte Quarzsande mit einer mittleren Körnung von 0,01 bis 0,5 mm, vorzugsweise etwa 0,1 bis 0,23 mm werden gemeinsam mit dem Härter, dem Ton und dem Kieselgur sorgfältig vermischt und mit einer geringen Menge Maschinenöl bedüst. Getrennt davon wird eine Mischung aus Wasserglaspulver der gewünschten Qualität ebenfalls mit einer kleinen Menge Maschinenöl bedüst. Anschließend werden die beiden bedüsten Teilmengen vorsichtig vermischt. Die getrennte Bedüsung dient dazu, die Oberfläche des Alkalisilikats von der Oberfläche des Härters zu trennen. Verwendete Mineralöle, normalerweise Übliche Maschinenöle, müssen deshalb sowohl gegenüber dem Alkalisilikat als auch gegenüber dem eingesetzten Härter inert sein. Jedes übliche Mineralöl erfüllt jedoch diese Anforderung.

Wenn die erfindungsgemäße Zementzusammensetzung nach dem Torkret-Verfahren verarbeitet werden soll, so ist es bevorzugt, daß der abgerundete Quarzsand Korngrößen von 0,06 - 0,32 mm, insbesondere von 0,1 - 0,23 mm aufweist. In diesem Fall sind Quarzsand-Mengen zwischen 40 und 58 Gew.-% bevorzugt. Bei der Auswahl des abgerundeten Quarzsandes, des Tones und des Kieselgurs ist darauf zu achten, daß darin praktisch keine Feinteile unter 30 Mikron enthalten sind, da diese als silikogener Staub wirken könnten.

Beim Torkret-Verfahren wird ein schnell abbindender wasserhaltiger Einkomponenten-Zement in Dicken von etwa 0,8 bis 1,2 cm auf horizontale, geneigte, oder vertikale Oberflächen aufgetragen, wo er erstarrt. Der wasserhaltige Zement wird hergestellt, indem man trockenen Alkalisilikat-Zement in das Beschickungsabteil einer Betonkanone oder Betonspritzmaschine einfüllt, das Beschickungsabteil mittels Druckluft unter Druck setzt, den trockenen Zement in abgemessenen Mengen von dem Beschickungsabteil mittels eines Materialzuführungsschlauches zu der Spritzmaschinendüse überführt und Spritzwasser von einer unter Druck stehenden Wasserzuleitung in die Spritzmaschinendüse einführt, um dort das Wasser mit dem Zement zu mischen. Die Mischung aus Alkalisilikat-Zement und Wasser wird, z. B. mittels eines Schlauches, auf die vorbehandelten Oberflächen aufgebracht. Der Zement benötigt mehrere Minuten, um auf den Oberflächen abzubinden. Bei Einsatz der erfindungsgemäßen Einkomponenten-Alkalizemente sind die Beschichtungen säurebeständig und sehr gut temperaturwechselbeständig.

Der Einsatz der erfindungsgemäßen trockenen Einkomponenten-Alkalisilikat-Zementzusammensetzung ist besonders interessant zur Herstellung korrosionsverhindernder Schutzschichten auf Stahloberflächen, die höheren Temperaturen ausgesetzt werden. Solche Schutzschichten werden als Innenauskleidung bei Quenchern in Müllverbrennungsanlagen, Cowpern (Winderhitzern von Hochöfen), Heißwindleitungen sowie in Gaskühlern erfolgreich verwendet.

Die Cowper haben in der Regel etwa 10 m Durchmesser und 50 m Höhe. Zur Beschichtung wird zunächst die gesamte innere Stahlfläche gereinigt, anschließend wird ein Zement/Wasser-Gemisch maschinell von oben nach unten aufgetragen, wobei Trockenförderspritzmaschinen eingesetzt werden. Diese Maschinentypen erlauben kontinuierliches, gleichmäßiges Spritzen und lassen ein Arbeiten ohne Unterbrechung zu. Die gesamte Spritzschicht wird bei Cowpern ca. 8 bis 12 mm dick aufgetragen. Ähnlich kann die Innenauskleidung von Kaminköpfen, die aus Stahl bestehen, mit Hilfe der erfindungsgemäßen Zementzusammensetzung erfolgen.

Die Menge des (nicht an der Stahloberfläche klebenden) Rückprallgutes, der Staubanfall und die Verdichtung der Spritzschicht sind abhängig von der Länge und der hydrostatischen Höhe des Materialtransportschlauches. Die Menge des Rückprallgutes ist ferner abhängig von der Materialzusammensetzung, der Spritzmaschine, der Haftfähigkeit des Untergrundes, der Be- und Entlüftung der Arbeitsstätte und der Gleichmäßigkeit des Auftrags, also der Erfahrung des Bedienungspersonals. Die Wassermenge muß gleichmäßig und sorgfältig dosiert werden, damit sich keine Nester mit unterschiedlicher Verteilung von Wasser und festen Anteilen bilden. Zwischen Aufbringen der Spritzschicht und Aushärten sind Erschütterungen zu vermeiden, da sonst die Gefahr besteht, daß das Material noch naß abrutscht, bzw. nach einigen Tagen Enthaftung der abgebundenen Beschichtung auftritt.

Die Erfindung wird durch die folgenden Beispiele näher erläutert.

### Beispiele:

Die folgenden trockenen Zementzusammensetzungen wurden mit Wasser versetzt und zu Kitten verarbeitet. An den abgebundenen Kitten wurde ermittelt, welchen Wert die Shore-Härte D hatte und nach welcher Zeit der Kitt wasserfest war. Die eingesetzten Härter I, II, III, IV und V werden in den Vergleichsbeispielen und Beispielen weiter unten definiert.

### Zusammensetzung A:

17,0 Gew.-% Wasserglaspulver (27 % Na₂O, 54 % SiO₂, 19 % H₂O)
0,3 Gew.-% Maschinenöl
20,0 Gew.-% Ton feinst
2,0 Gew.-% Kieselgur
5,7 Gew.-% Härter I, II, III, IV oder V
55,0 Gew.-% Quarzsand

Der Quarzsand setzte sich aus abgerundeten und gewaschenen Sanden mit mittlerer Körnung von 0,15 mm und solchen mit mittlerer Körnung von 0,23 mm etwa im Verhältnis 1 : 2 zusammen. Das Eckigkeitsverhältnis lag unter 1,4.

Zur Herstellung der Kittmasse wurden 100 Gew.-Teile der Zusammensetzung A mit 14 Gew.-Teilen Wasser gemischt.

### Zusammensetzung B:

13,6 Gew.-% Wasserglaspulver (27 % Na₂O, 54 % SiO₂, 19 % H₂O)
3,4 Gew.-% Wasserglaspulver (28 % K₂O, 56 % SiO₂, 16 % H₂O)
0,3 Gew.-% Maschinenöl
23,0 Gew.-% Ton feinst
2,0 Gew.-% Kieselgur
6,0 Gew.-% Härter I, II, III, IV oder V
51,7 Gew.-% Quarzsand wie in Zusammensetzung A

Zur Herstellung der Kittmasse wurden 100 Gew.-Teile Zusammensetzung B mit 18 Gew.-Teilen Wasser gemischt.

### Vergleichsbeispiel 1:

Es wurden 5,7 Gew.-% Härter I = kondensiertes Aluminiumphosphat gemäß EP-B-0 133 953 zur Herstellung der Zusammensetzung A/I eingesetzt und diese dann mit Wasser (14 Gew.-Teile pro 100 Gew.-Teile A/I) zu Kitt gemischt. Analog wurde mit 6 Gew.-% Härter I die Zusammensetzung B/I hergestellt und dann mit Wasser (18 Gew.-Teile pro 100 Gew.-Teile B/I) zu Kitt gemischt. Die ermittelte Shore-Härte D und die Zeit, nach der der Kitt wasserfest war, sind aus der Tabelle ersichtlich.

### Vergleichsbeispiel 2:

Es gilt dasselbe wie in Vergleichsbeispiel 1, nur daß statt Härter I jetzt Härter II = kondensiertes Eisen/Aluminiumphosphat gemäß EP-B-0 133 953 verwendet wurde.

### Beispiel 1:

Es gilt dasselbe wie in Vergleichsbeispiel 1, nur daß statt Härter I jetzt Härter III = Mischung aus kondensiertem Aluminiumphosphat (5,2 Gew.-% für A/III bzw. 5,5 Gew.-% für B/III) und Manganorthophosphat Mn₃(PO₄)₂ (0,5 Gew.-% für A/III und für B/III) verwendet wurde.

### Beispiel 2:

Es gilt dasselbe wie in Vergleichsbeispiel 1, nur daß statt Härter I jetzt Härter IV = Mischung aus kondensiertem Aluminiumphosphat (5,2 Gew.-% für A/IV bzw. 5,5 Gew.-% für B/IV) und Zinkphosphat (0,5 Gew.-% für A/IV und für B/IV) verwendet wurde.

### Beispiel 3:

Es gilt dasselbe wie in Vergleichsbeispiel 1, nur daß statt Härter I jetzt Härter V = Mischung aus kondensiertem Aluminiumphosphat (5,2 Gew.-% für A/V bzw. 5,5 Gew.-% für B/V) und Eisen(III)phosphat (0,5 Gew.-% für A/V und für B/V) verwendet wurde.

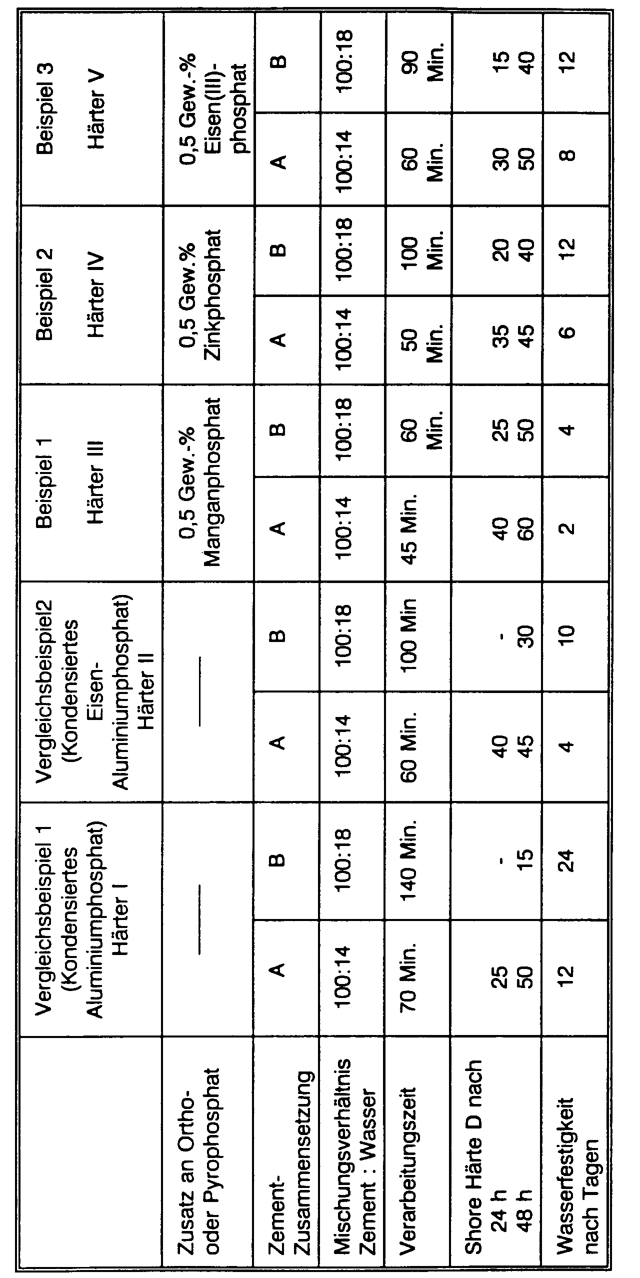

### Beispiel 4:

Gemäß folgender Rezeptur wurde eine trockene Einkomponenten-Zementzusammensetzung hergestellt:
17,0 Gew.-% Wasserglaspulver (28 % K₂O, 56 % SiO₂, 16 % H₂O)
0,3 Gew.-% Maschinenöl
0,3 Gew.-% Stuckgips
5,4 Gew.-% Härter (4,9 Gew.-% kond. Al-Phosphat und 0,5 Gew.-% Mn₃(PO₄)₂)
1,0 Gew.-% Kieselgur
16,0 Gew.-% Ton fein
60,0 Gew.-% Quarzsand wie in Vergleichsbeispiel 1

Diese trockene Zementzusammensetzung wurde in den Trichter einer Spritzmaschine (Rotormaschine mit Revolversystem vom Typ Aliva-242 der Aliva AG, Widen, Schweiz) eingefüllt und über einen Rührstern zum Rotor geführt. Die Rotorkammern transportierten die noch pulverförmige Mischung zum Auslauf, wo sie mit einem Luftstrom zur Düse eingeführt wurde. In der Spritzdüse wurden zu 100 Gew.-Teilen pulverförmiger Mischung unter einem Druck von 3 bis 4 bar 18 bis 20 Gew.-Teile Wasser eindosiert und vermischt. Der Kitt wurde durch die Druckluft, die auf das Beschickungsabteil aufgegeben wurde, auf die zu beschichtende sandgestrahlte Blechwand in einem Arbeitsgang aufgesprüht. Der Kitt erhärtete innerhalb von 24 Stunden bei 20°C. Für die Beschichtung von 1m² Fläche wurden bei einer Schichtdicke von 10 mm etwa 18 kg der trockenen Ansatzmischung sowie ca. 3,4 kg Wasser benötigt. Die so behandelte Stahloberfläche mit einer Beschichtung von 1-2 cm war beständig gegen organische und anorganische Säuren, mit Ausnahme von Flußsäure und konz. Phosphorsäure bei sehr hohen Temperaturen. Ferner war dieser Überzug gegen Öle, Lösemittel und Fette sowie Oxidantien beständig. Stark alkalische Beanspruchung wurde nicht ertragen.

## Patentansprüche

1. Trockene, tensidfreie Einkomponenten-Alkalisilikat-Zementzusammensetzung, gekennzeichnet durch die folgenden Bestandteile:
a) kondensiertes Aluminiumphosphat in Mengen von 2-10 Gew.-%
b) mindestens eine Verbindung aus der Gruppe, bestehend aus den Ortho- und Pyrophosphaten von Mangan, Zink, Cobalt, Eisen (III) und Chrom (III) in Mengen von 0,5 bis 8 Gew.-%
c) abgerundeter Quarzsand mit einer Korngröße von 0,01 - 0,5 mm in Mengen von 30-70 Gew.-%
d) Ton in Mengen von 10-40 Gew.-%
e) Kieselgur in Mengen von 1-5 Gew.-%
f) Mineralöl in Mengen von 0,05 - 1 Gew.-% und
g) festes gepulvertes Natrium- oder Kaliumwasserglas oder deren Gemische in Mengen von 10-25 Gew.-%

2. Zusammensetzung nach Anspruch 1, dadurch gekennzeichnet, daß als Bestandteil b) ein Ortho- oder Pyrophosphat von Mangan, Zink oder Eisen (III) eingesetzt wird.

3. Zusammensetzung nach Anspruch 1, dadurch gekennzeichnet, daß als Bestandteil b) Manganorthophosphat eingesetzt wird.

## Claims

1. A dry, surfactant-free single-component alkali metal silicate cement composition, which comprises the following components:
a) condensed aluminum phosphate in quantities of 2-10% by weight
b) at least one compound from the group comprising the ortho- and pyrophosphates of manganese, zinc, cobalt, iron(III) and chromium(III) in quantities of 0.5 to 8% by weight
c) rounded quartz sand with a grain size of 0.01-0.5 mm in quantities of 30-70% by weight
d) clay in quantities of 10-40% by weight
e) kieselguhr in quantities of 1-5% by weight
f) mineral oil in quantities of 0.05-1% by weight and
g) solid powdered sodium water glass or potassium water glass or mixtures thereof in quantities of 10-25% by weight.

2. A composition as claimed in claim 1, wherein component b) is an ortho- or pyrophosphate of manganese, zinc or iron(III).

3. A composition as claimed in claim 1, wherein component b) is manganese orthophosphate.

## Revendications

1. Composition à un composant à base de silicate alcalin, sèche, ne comportant pas d'agents de surface, caractérisée en ce qu'elle contient les constituants suivants :
a) phosphate d'aluminium condensé dans une quantité de 2 à 10 % en poids
b) au moins un composé pris dans le groupe comportant les ortho- et les pyrophosphates de manganèse, de zinc, de cobalt, de fer(III) et de chrome(III) dans une quantité de 0,5 à 8 % en poids
c) sable de quartz arrondi, ayant une granulométrie de 0,01 à 0,5 mm, dans une quantité de 30 à 70% en poids
d) argile dans une quantité de 10 à 40% en poids
e) kieselguhr dans une quantité de 1 à 5% en poids
f) huile minérale dans une quantité de 0,05 à 1% en poids, et
g) verre soluble silicate de sodium ou de potassium ou leurs mélanges dans une quantité de 10 à 25% en poids.

2. Composition selon la revendication 1, caractérisée en ce qu'on utilise comme composant b) l'ortho- ou le pyrophosphate de manganèse, de zinc ou de fer(III).

3. Composition selon la revendication 1, caractérisée en ce qu'on utilise comme composant b) l'orthophosphate de manganèse.
